# EUROPEAN PATENT SPECIFICATION

(11) **EP 2 853 415 B1**
(45) Date of publication and mention of the grant of the patent: **12.12.2018**
(21) Application number: 14187200.2
(22) Date of filing: 30.09.2014
(51) Int. Cl.: B60B 30/00, B60B 30/02, B60B 30/04

(54) **Wall support for at least one tire**
Wandhalter für mindestens einen Reifen
Support mural pour au moins un pneu

(30) Priority: 30.09.2013 IT MI20131606
(43) Date of publication of application: 01.04.2015
(73) Proprietor: Fasb Linea 2 S.r.l., Cremella (IT)
(72) Inventor: Fumagalli, Luigi, 23896 Sirtori (IT)
(74) Representative: Andreotti, Erika

(56) References cited:
- "attitude-garage-adjustable-tire-storage-r acks-with-bicycle", SmartHomeIdeas.net, 4 February 2013 (2013-02-04), XP055094509, Retrieved from the Internet: URL:http://www.attitudegarage.com/appiesne t/wordpress/wp-content/uploads/2013/02/att itude-garage-adjustable-tire-storage-racks -with-bicycle.png [retrieved on 2013-12-20]
- Travisnd: "Just ordered a wall-mounted tire rack (build vs. buy) - Page 2 - The Garage Journal Board", garagejournal.com, 22 October 2010 (2010-10-22), XP055094519, No. 26, 27 Retrieved from the Internet: URL:http://www.garagejournal.com/forum/sho wthread.php?t=78647&page=2 [retrieved on 2013-12-20]

## Description

The present invention relates to a wall support for at least one tire. In particular, the present invention relates to a wall support for the tires of a vehicle, preferably an automobile.

On the market supports for tires of different types are known, being usually used to store summer tires in the garage during the winter season and, likewise, winter tires during the summer season.

A first type of support substantially consists of a shelf where the brackets are defined by parallel bars and which are arranged on a same horizontal plane on which the tires rest.

A second type of support consists of a vertical shaft held by a support base to the ground and provided with a plurality of hooks to which the tires are fixed.

A third type of support consists of a vertical shaft inserted into the tires which are provided with rims. The vertical shaft is of course supported by a base held to the ground.

These types of support, however, are characterized by considerable overall dimensions.

Another type of support is known (TRAVISND: "Just ordered a wall-mounted tire rack (build vs. buy) - Page 2 - The Garage Journal Board", GARAGEJOURNAL.COM, No. 26, 27, URL:http://www.garagejournal.com/forum/showthread.php?t=78647& page=2 and attitude-garage-adjustable-tire-storage-racks-with-bicycle", SMARTHOMEIDEAS.NET, URL:http://www.attitudegarage.com/ appiesnet/wordpress/wp-content/uploads/2013/02/attitude-garage-adjustable-tire-storage-racks-with-bicycle.png).
However these wall support have a structure comprising different components and which is not easy and economical to manufacture.

It is therefore an object of the present invention to provide a wall support so as to reduce the overall dimensions and make the best use of the space available, for example in a garage. It is also an object of the present invention to provide a wall support for at least one tire which is easy and inexpensive to manufacture.

According to these purposes, the present invention relates to a wall support for at least one tire according to claim 1.

Thanks to said structure, the wall support according to the present invention has a number of components reduced to a minimum. Consequently, the wall support according to the present invention is easy and economical to manufacture. Moreover the presence of few components allows the possibility to sell the kit disassembled, possibly mountable directly by the user.

Further characteristics and advantages of the present invention will become clear from the following description of one non-limiting example, with reference to the figures of the accompanying drawings, wherein:
- Figure 1 is a perspective view of a wall support for at least one tire according to the present invention in a first use configuration;
- Figure 2 is a perspective view of a disassembled wall support for at least one tire according to the present invention.

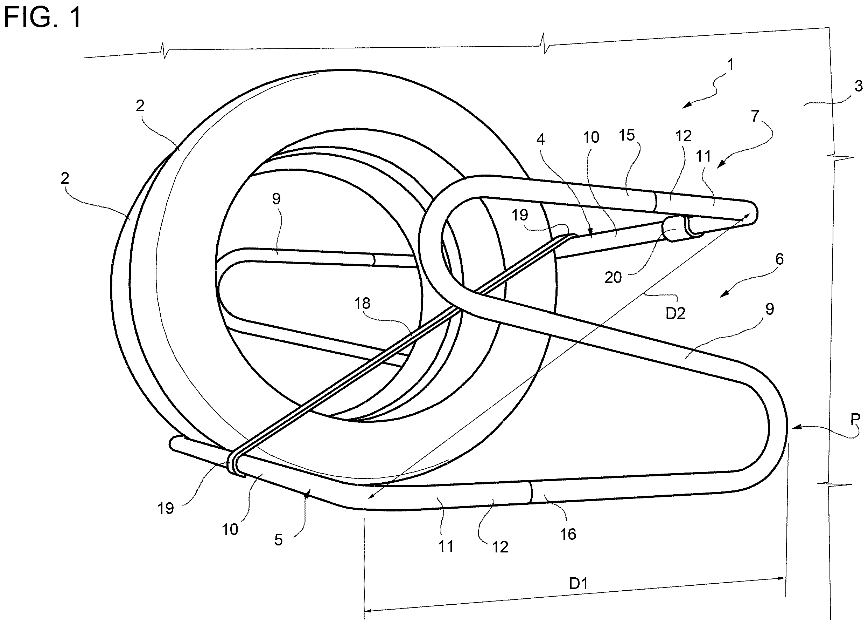

In figure 1 is indicated with the reference number 1 a wall support for at least one tire 2 according to the present invention. In Figure 1, the support 1 is represented in a use configuration in which the support 1 is fixed to a wall 3 and supports two tires 2.

It is understood that use configurations can be varied.
For example, the support 1 can be fixed to a wall system, and can support more than two tires 2, also of different types.

The support 1 comprises a first support bar 4, a second support bar 5, support means 6, configured to support, in use, the second support bar 5 under the first support bar 4 and at a specific distance D1 from the wall 3, and fixing means 7, configured to fix, in use, the first support bar 4 to the wall 3.

The first support bar 4 and the second support bar 5 define the only support points for the supported tires 2.

The first support bar 4 and the second support bar 5 are, in fact, arranged at a distance D2 one from the other so as to prevent the supported tire 2 from touching the wall 3 and leaning thereon.

In particular, the distance D2 is lower or at most equal to a given threshold value defined according to the type of tire 2 to be supported. In detail, the distance D2 is lesser or at most equal to the diameter of the smallest tire 2 which is intended to be supported.

For example, in the support 1, illustrated in the attached figures, the distance D2 is equal to about 57 cm. In this way, the support 1 is capable of supporting tires 2 having a diameter greater than or equal to 57 cm.

The illustrated support 1, is therefore capable of supporting tires for utility cars (usually having a diameter of 584 mm), but also tires for minivans, station wagons, off-road vehicles and SUVs (diameters of the order of 700 mm).

If the support 1 is intended to be used to support motorcycles tires, the predefined threshold value for the distance D2 will have to be 30 cm.

Preferably, the first support bar 4 and the second support bar 5 are defined respectively by a tubular element, hollow and/or metallic. Preferably the tubular element has a circular section.

An alternative not illustrated provides that the first support bar 4 and the second support bar 5 are defined respectively by a metallic profile-section.

Preferably, the first support bar 4 and the second support bar 5 are essentially identical.

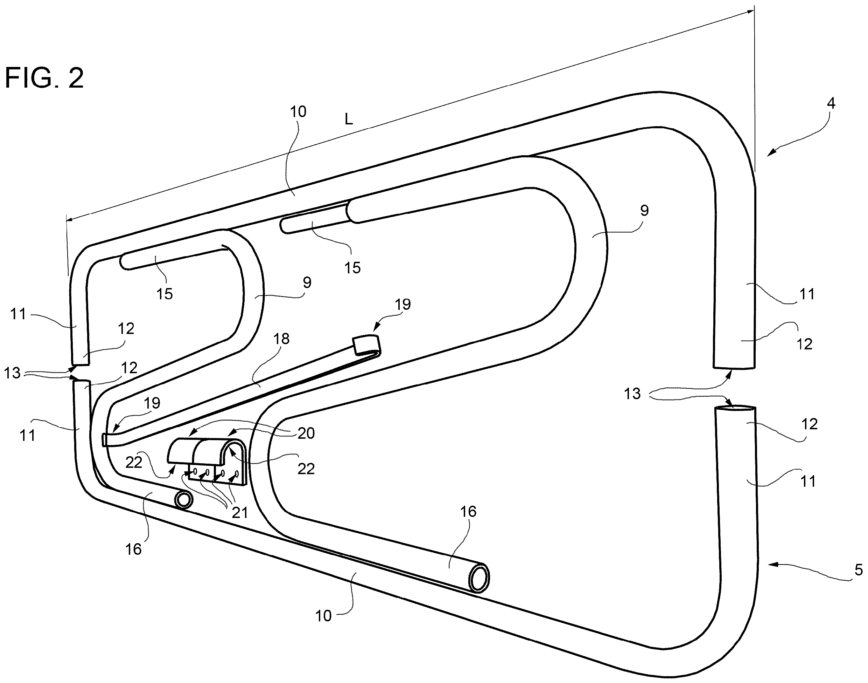

With reference to Figure 2 which illustrates the support 1 in a disassembled configuration, the first support bar 4 and the second support bar 5 are substantially U-shaped. In particular, the first support bar 4 and the second support bar 5 are defined by a base element 10, which extends longitudinally for a length L, and by two arms 11, which extend orthogonally to the base element 10.

The length L defines the capacity of the support 1. In the non-limiting example here described and illustrated, the length L is sufficient to support up to four tires 2 having a maximum width tread of 225 mm.

It is understood that the support 1 can be adequately sized to support a greater or lower number of tires 2.

Each arm 11 comprises an end 12 in correspondence of which the tubular element is open and defines a cylindrical seat 13.

Preferably, at least the base element 10 of the first support bar 4 and of the second support bar 5 is coated with a wear-resistant material, preferably PVC. In this way, supporting the tire 2 does not cause wear on the support bars 4 and 5.

An alternative not illustrated provides that the first support bar 4 and the second support bar 5 are respectively obtained with two tubular elements telescopically coupled with respect to one another so as to allow a variation of the length L of the base element according to usage requirements.

The support means 6 of the second support bar 5 comprise two spacer bars 9 substantially identical and preferably S-shaped.

Each spacer bar 9 is provided with at least one point arranged, in use, resting on the wall 3 (Figure 1).

In detail, each spacer bar 9, in use, comprises a first end 15 fixed to the first support bar 4 and a second end 16 fixed to the second support bar 5.

In particular, each spacer bar 9 is defined by a tubular element, preferably hollow and metallic, having a section lesser than the section of the hollow tubular elements defining the first support bar 4 and the second support bar 5.

In this way, the first end 14 and second end 15 engage, in use, the seat 13 of the respective ends 12 respectively of the first support bar 4 and of the second support bar 5 to define the coupling between the spacer bars 9 and the support bars 4 and 5.

It is understood that it is possible to provide a similar situation in which each spacer bar 9 is defined by a tubular element, preferably hollow and metallic, having a section greater than the section of the hollow tubular elements defining the first support bar 4 and the second support bar 5, so that the ends 12 of the first support bar 4 and of the second support bar 5 are engaging respective seats of the spacer bars 9.

Preferably, the coupling between the spacer bars 9, the first support bar 4 and the second support bar 5 is further ensured by security fixing means of screw or snap-in type, not illustrated in the attached figures for simplicity.

An alternative not illustrated provides that the spacer bars are made foldable or, alternatively, are provided with an articulated joint able to allow the approach of the second support bar 5 to the first support bar 4 in order to reduce the overall dimensions of the support 1 when the latter is not used to support the tires.

According to a preferred embodiment, the support means 6 comprise a further spacer bar 18, which is fixed to a central portion of the base element 10 of the first support bar 4 and to a central portion of the base element 10 of the second support bar 5 as illustrated in figure 1.

Preferably, the additional spacer bar 18 is defined by a metallic plate having u-folded ends 19 suited to define a seat engaged, in use, by the tubular elements defining the base element of the first support bar 4 and of the second support bar 5.

The additional spacer bar 18 ensures that the weight of the tires 2 does not lead to a lowering of the second support bar 5.

In the non-limiting example herein described and illustrated the fixing means 7 comprise two small plates 20, each of which comprises a first portion provided with two holes 21 for fixing to the wall 3 by means of screws or similar fixing systems, and a second U-folded portion so as to define a housing seat 22, configured to house the base element 10 of the first support bar 5.

The fixing means 7 are therefore configured so that the first support bar 4 also constitutes a bar for fixing to the wall 3.

In this way the support structure 1 is defined by a minimum number of components, with obvious advantages from the economic point of view.

In this way the production cost of the support 1 according to the present invention, in terms of materials used, assembly and manufacturing time, is reduced compared to supports according to the prior art.

Moreover, the fact that the first support bar 4 and the second support bar 5 are substantially identical reduces even more the manufacturing cost and time of the support 1.

Also the fact that the spacer bars 9 are identical favors the lowering of manufacturing cost and time of the support 1.

Furthermore, the support 1 according to the present invention is, precisely due to its simplified structure, easily mountable. This allows the marketing of a disassembled kit provided with assembly instructions and mountable by the user if necessary. This aspect reduces the sales cost to the public and makes the cost of warehousing and storage less due to the small overall dimensions of the disassambled support 1 (Figure 2) .

Advantageously, the support 1 is also able to support tires 2 provided with wheel rims.

Advantageously, the support 1 is able to support different types of tires, even simultaneously.

Advantageously, the support 1 is configured to prevent the supported tire 2 from touching the wall 3 to which the support 1 is fixed. This avoids damaging and soiling the wall 3.

Advantageously, the support 1 supports the tires 2 in a position that prevents the deformation thereof. Therefore thanks to the support 1 it is no longer necessary to have to turn the tires every four weeks as with the supports of the prior art.

## Claims

1. Wall support for at least one tire (2) comprising:
• a first support bar (4) configured to define a first support point for the tire (2);
• a second support bar (5) configured to define a second support point for the tire (2);
• support means (6) configured to support, in use, the second support bar (5) under the first support bar (4) and at a given distance (D1) from a wall (3);
• fixing means (7) configured to fix, in use, the first support bar (4) to the wall (3) ;
the wall support being **characterized by** the fact that the support means (6) comprises two spacer bars (9) substantially identical and substantially S-shaped

2. Wall support according to claim 1, wherein the first support bar (4) and the second support bar (5) are arranged at a distance (D2) less or at the most equal to a predefined threshold value.

3. Wall support according to claim 2, wherein the predefined threshold value is equal to the diameter of the smallest tire (2) which is intended to be supported.

4. Wall support according to claim 2 or 3, wherein the predefined threshold value is equal to 30 cm.

5. Wall support according to claim 1, wherein each spacer bar (9) comprise at least a point (P) arranged, in use, in contact with the wall (3).

6. Wall support according to anyone of the foregoing claims, wherein each spacer bar (9), in use, comprises a first end (15) fixed to the first support bar (4) and a second end (16) fixed to the second support bar (6).

7. Wall support according to anyone of the foregoing claims, comprising a further spacer bar (18) fixed to a central portion of the first support bar (4) and to a central portion of the second support bar (5).

8. Wall support according to any one of the foregoing claims, wherein the first support bar (4) is defined by a tubular element substantially U-shaped and provided with a base element (10) and with two arms (11) substantially orthogonal to the base element (10).

9. Wall support according to any one of the foregoing claims, wherein the first support bar (4) is made of metallic material.

10. Wall support according to any one of the foregoing claims, wherein the first support bar (4) is coated, at least partially, with a wear-resistant material, preferably PVC.

11. Wall support according to any one of the foregoing claims, wherein the second support bar (5) is substantially identical to the first support bar (4).

## Patentansprüche

1. Wandhalter für zumindest einen Reifen (2), umfassend:
eine erste Halterstange (4), die dafür eingerichtet ist, einen ersten Auflagepunkt für den Reifen (2) zu definieren;
eine zweite Halterstange (5), die dafür eingerichtet ist, einen zweiten Auflagepunkt für den Reifen (2) zu definieren;
Haltermittel (6), das dafür eingerichtet ist, in Verwendung die zweite Halterstange (5) unter der ersten Halterstange (4) und in einer gegebenen Distanz (D1) von einer Wand (3) zu halten;
Befestigungsmittel (7), das dafür eingerichtet ist, in Verwendung die erste Halterstange (4) an der Wand (3) zu befestigen;
wobei der Wandhalter **gekennzeichnet ist durch** die Tatsache, dass das Haltermittel (6) zwei Abstandshalterstangen (9) umfasst, die im Wesentlichen identisch und im Wesentlichen S-förmig sind.

2. Wandhalter nach Anspruch 1, wobei die erste Halterstange (4) und die zweite Halterstange (5) in einer Distanz (D2) angeordnet sind, die geringer als oder höchstens gleich einem vordefinierten Schwellenwert ist.

3. Wandhalter nach Anspruch 2, wobei der vordefinierte Schwellenwert gleich dem Durchmesser des kleinsten Reifens (2) ist, der gehalten werden soll.

4. Wandhalter nach Anspruch 2 oder 3, wobei der vordefinierte Schwellenwert gleich 30 cm ist.

5. Wandhalter nach Anspruch 1, wobei jede Abstandshalterstange (9) zumindest einen Punkt (P) aufweist, der in Verwendung mit der Wand (3) in Kontakt ist.

6. Wandhalter nach einem der vorhergehenden Ansprüche, wobei jede Abstandshalterstange (9) in Verwendung ein an der ersten Halterstange (4) befestigtes erstes Ende (15) und ein an der zweiten Halterstange (6) befestigtes zweites Ende (16) umfasst.

7. Wandhalter nach einem der vorhergehenden Ansprüche, ferner umfassend eine weitere Abstandshalterstange (18), die an einem zentralen Abschnitt der ersten Halterstange (4) und an einem zentralen Abschnitt der zweiten Halterstange (5) befestigt wird.

8. Wandhalter nach einem der vorhergehenden Ansprüche, wobei die erste Halterstange (4) durch ein rohrförmiges Element definiert ist, das im Wesentlichen U-förmig und mit einem Basiselement (10) und mit zwei, zum Basiselement (10) im Wesentlichen orthogonalen Armen (11) versehen ist.

9. Wandhalter nach einem der vorhergehenden Ansprüche, wobei die erste Halterstange (4) aus einem metallischen Material hergestellt ist.

10. Wandhalter nach einem der vorhergehenden Ansprüche, wobei die erste Halterstange (4) zumindest teilweise mit einem verschleißfesten Material, vorzugsweise PVC, beschichtet ist.

11. Wandhalter nach einem der vorhergehenden Ansprüche, wobei die zweite Halterstange (5) mit der ersten Halterstange (4) im Wesentlichen identisch ist.

## Revendications

1. Support mural pour au moins un pneu (2) comprenant :
une première barre de support (4) configurée pour définir un premier point de support pour le pneu (2) ;
une seconde barre de support (5) configurée pour définir un second point de support pour le pneu (2) ;
des moyens de support (6) configurés pour supporter, à l'usage, la seconde barre de support (5) sous la première barre de support (4) et à une distance (D1) donnée d'un mur (3) ;
des moyens de fixation (7) configurés pour fixer, à l'usage, la première barre de support (4) sur le mur (3) ;
le support mural étant **caractérisé en ce que** les moyens de support (6) comprennent des barres d'espacement (9) sensiblement identiques et sensiblement en forme de S.

2. Support mural selon la revendication 1, dans lequel la première barre de support (4) et la seconde barre de support (5) sont agencées à une distance (D2) inférieure ou au maximum égale à une valeur de seuil prédéfinie.

3. Support mural selon la revendication 2, dans lequel la valeur de seuil prédéfinie est égale au diamètre du plus petit pneu (2) qu'il doit supporter.

4. Support mural selon la revendication 2 ou 3, dans lequel la valeur de seuil prédéfinie est égale à 30 cm.

5. Support mural selon la revendication 1, dans lequel chaque barre d'espacement (9) comprend au moins un point (P) agencé, à l'usage, en contact avec le mur (3) .

6. Support mural selon l'une quelconque des revendications précédentes, dans lequel chaque barre d'espacement (9), à l'usage, comprend une première extrémité (15) fixée sur la première barre de support (4) et une seconde extrémité (16) fixée sur la seconde barre de support (6).

7. Support mural selon l'une quelconque des revendications précédentes, comprenant une autre barre d'espacement (18) fixée sur une partie centrale de la première barre de support (4) et sur une partie centrale de la seconde barre de support (5).

8. Support mural selon l'une quelconque des revendications précédentes, dans lequel la première barre de support (4) est définie par un élément tubulaire sensiblement en forme de U et prévue avec un élément de base (10) et avec deux bras (11) sensiblement orthogonaux à l'élément de base (10).

9. Support mural selon l'une quelconque des revendications précédentes, dans lequel la première barre de support (4) est réalisée avec un matériau métallique.

10. Support mural selon l'une quelconque des revendications précédentes, dans lequel la première barre de support (4) est recouverte, au moins partiellement, avec un matériau résistant à l'usure, de préférence du PVC.

11. Support mural selon l'une quelconque des revendications précédentes, dans lequel la seconde barre de support (5) est sensiblement identique à la première barre de support (4).
